# EUROPÄISCHE PATENTSCHRIFT

(11) **EP 3 172 467 B1**
(45) Veröffentlichungstag und Bekanntmachung des Hinweises auf die Patenterteilung: **07.11.2018**
(21) Anmeldenummer: 15734207.2
(22) Anmeldetag: 08.07.2015
(51) Int. Cl.: F04F 5/20, F01D 11/04, C01B 21/38, B01J 3/03, F16J 15/44, F16J 15/447, F01D 25/00, F01D 11/00

(54) **DICHTVORRICHTUNG ZUR ABDICHTUNG EINER DREHBAREN WELLE EINES GASKOMPRESSORS UND/ODER EINES GASEXPANDERS IN EINER ANLAGE ZUR HERSTELLUNG VON SALPETERSÄURE**
SEALING DEVICE FOR SEALING A ROTATABLE SHAFT OF A GAS COMPRESSOR AND/OR OF A GAS EXPANDER IN AN INSTALLATION FOR PRODUCING NITRIC ACID
DISPOSITIF D'ÉTANCHÉITÉ PERMETTANT DE RÉALISER L'ÉTANCHÉITÉ D'UN ARBRE ROTATIF D'UN COMPRESSEUR DE GAZ ET/OU D'UN DÉTENDEUR DE GAZ DANS UNE INSTALLATION SERVANT À LA PRODUCTION D'ACIDE NITRIQUE

(30) Priorität: 25.07.2014 DE 102014214685
(43) Veröffentlichungstag der Anmeldung: 31.05.2017
(73) Patentinhaber: thyssenkrupp Industrial Solutions AG, 45143 Essen (DE); thyssenkrupp AG, 45143 Essen (DE)
(72) Erfinder: BIRKE, Daniel, 49326 Melle (DE)
(74) Vertreter: thyssenkrupp Intellectual Property GmbH
(86) Internationale Anmeldenummer: PCT/EP2015/065556
(87) Internationale Veröffentlichungsnummer: WO 2016/012237

(56) Entgegenhaltungen:
- GB-A- 1 085 386
- GB-A- 1 582 209
- US-A- 3 071 384
- US-A- 5 632 492

## Beschreibung

### Stand der Technik

Die vorliegende Erfindung betrifft eine Dichtvorrichtung sowie ein entsprechendes Verfahren zur Abdichtung einer drehbaren Welle eines Gaskompressors und/oder eines Gasexpanders, mit einer ersten Sperrkammer, welche die Welle umgibt und einen Einlass zur Zuführung eines Sperrmediums aufweist, und einer von der ersten Sperrkammer durch eine Dichtung getrennten zweiten Sperrkammer, welche die Welle umgibt und einen Auslass zum Austritt des Sperrmediums aufweist. Insbesondere betrifft die Erfindung eine Anlage zur Herstellung von Salpetersäure mit einem NO-Kompressor und einem Restgasexpander sowie ein entsprechendes Verfahren zum Betrieb einer derartigen Anlage.

Eine derartige Dichtvorrichtung kann beispielsweise in einer Anlage zur Herstellung von Salpetersäure zur Anwendung kommen. Eine solche Anlage ist z. B. aus der DE 10 2008 027 232 B3 bekannt. Bei dem dort beschriebenen Verfahren zur Herstellung von Salpetersäure wird NO-haltiges Gas durch einen NO-Kompressor verdichtet. Das verdichtete Gas wird in einen Hochdruckteil der Anlage geleitet, in welchem eine Oxidation von NO zu NO₂ sowie eine Absorption von Salpetersäure stattfindet. Das nicht absorbierte Restgas wird einem Restgasexpander zugeleitet, um es zur Gewinnung von Energie auf Umgebungsdruck zu entspannen. Die in dem Expander erhaltene Energie kann zum Betrieb des Kompressors genutzt werden. US 5,632,492 A offenbart eine Abdichtungsvorrichtung für eine Welle innerhalb eines stationären Gehäuses.

Der Kompressor und der Expander dieser Anlage weisen jeweils eine drehbare Welle auf, an welchem ein rotierendes Laufrad angeordnet ist. Die Laufräder von Kompressor und Expander befinden sich in einem Innenraum, welcher gegenüber der Welle abgedichtet ist, um den Austritt der in Kompressor bzw. Expander geleiteten Gase zu verhindern. Zur Abdichtung kommen Dichtvorrichtungen zum Einsatz, welche mindestens zwei Sperrkammern aufweisen. Die Sperrkammern sind derart angeordnet, dass sie die Welle umgeben und in axialer Richtung von dem Innenraum beabstandet sind. Die Sperrkammern sind gegenüber dem Innenraum sowie gegenüber der Umgebung über zwischen

Gehäuseinnenwand und Welle angeordnete Dichtmittel abgedichtet. In eine erste der beiden Sperrkammern wird ein Sperrgas eingeleitet, welches aufgrund von Undichtigkeiten der Dichtmittel teilweise in den Innenraum und teilweise in die angrenzende zweite Sperrkammer gelangen kann. Durch die Beaufschlagung der Dichtmittel mit dem Sperrgas kann verhindert werden, dass Gase aus dem Innenraum von NO-Kompressor und/oder Restgasexpander in die Umgebungsluft entweichen.

Die bekannte Dichtvorrichtung hat sich in der Praxis bewährt. Allerdings hat es sich herausgestellt, dass es bei einem Ausfall des Sperrmediums an den Dichtmitteln von NO-Kompressor und/oder Restgasexpander zu einer Freisetzung von Stickoxiden kommen kann. Die Stickoxide können zu Reizungen und Schädigungen der Atemwege von Personen führen, die sich in der Nähe der Anlage aufhalten.

### Offenbarung der Erfindung

Vor diesem Hintergrund ist es Aufgabe der vorliegenden Erfindung, die Sicherheit eines mit einem gesundheitsgefährdenden Gas betriebenen Kompressors und/oder eines Expanders zu erhöhen.

Die vorliegende Erfindung löst die Aufgabe gemäß Anspruch 1 durch eine Anlage zur Herstellung von Salpetersäure mit einem NO-Kompressor und einem Restgasexpander, wobei NO-Kompressor und/oder Restgasexpander eine Dichtvorrichtung zur Abdichtung einer drehbaren Welle des NO-Kompressors oder Restgasexpanders aufweisen, mit einer ersten Sperrkammer, welche die Welle umgibt und einen Einlass zur Zuführung eines Sperrmediums aufweist, und einer von der ersten Sperrkammer durch eine Dichtung getrennten zweiten Sperrkammer, welche die Welle umgibt und einen Auslass zum Austritt des Sperrmediums aufweist, wobei eine Absaugvorrichtung zum Absaugen des Sperrmediums aus der zweiten Sperrkammer vorgesehen ist.

Bei einer Anlage zur Herstellung von Salpetersäure mit einem NO-Kompressor und einem Restgasexpander trägt es zur Lösung der Aufgabe bei, wenn der NO-Kompressor und/oder der Restgasexpander eine derartige Dichtvorrichtung aufweist.

Durch die Absaugvorrichtung kann in der zweiten Sperrkammer ein Unterdruck erzeugt werden, so dass Gas aus der zweiten Sperrkammer abgesaugt wird. Selbst beim Ausfall des Sperrmediums wird sich in der zweiten Sperrkammer sammelndes Gas abgesaugt und kann nicht in die Umgebung entweichen. Hierdurch kann die Freisetzung gefährlicher Gase verhindert und somit die Sicherheit des Kompressors bzw. des Expanders erhöht werden.

Gemäß einer vorteilhaften Ausgestaltung der Erfindung ist die Absaugvorrichtung als Strahlpumpe ausgebildet. Bei einer Strahlpumpe wird die Absaugwirkung durch einen Treibstrom erzeugt, welcher das Sperrmedium ansaugt. Da Strahlpumpen in der Regel keine bewegbaren Elemente aufweisen, sind sie wartungsarm und wenig störungsanfällig. Besonders vorteilhaft ist, es wenn eine als Ejektor ausgebildete Strahlpumpe verwendet wird, so dass in der Sperrkammer ein Unterdruck erzeugt werden kann.

Bevorzugt ist es, wenn die Dichtvorrichtung eine dritte Sperrkammer aufweist, welche die Welle umgibt und einen Auslass zum Austritt des Sperrmediums aufweist, wobei die zweite Sperrkammer zwischen der ersten Sperrkammer und der dritten Sperrkammer angeordnet ist. In der dritten Sperrkammer kann sich Gas ansammeln, welches durch Undichtigkeiten einer Dichtung zwischen der zweiten Sperrkammer und der dritten Sperrkammer gelangt. Somit kann solches Gas, welches in unerwünschter Weise aus der zweiten Sperrkammer entweicht, aufgefangen werden und es kann verhindert werden, dass dieses Gas in die Umgebung gelangt. Somit kann durch die dritte Sperrkammer die Sicherheit der Dichtvorrichtung nochmals erhöht werden.

In diesen Zusammenhang hat es sich als besonders vorteilhaft herausgestellt, wenn das Sperrmedium über die Absaugvorrichtung aus der dritten Sperrkammer absaugbar ist. Durch eine gemeinsame Absaugvorrichtung zum Absaugen des Sperrmediums aus der zweiten Sperrkammer und der dritten Sperrkammer kann nicht nur in der zweiten Sperrkammer sondern auch in der dritten Sperrkammer ein Unterdruck erzeugt werden. Gase können aus der zweiten Sperrkammer und der dritten Sperrkammer abgesaugt werden. Hierdurch kann die die Sicherheit des Kompressors bzw. des Expanders nochmals erhöht werden. Alternativ können zwei separate Absaugvorrichtungen zum Absaugen des Sperrmediums aus der zweiten Sperrkammer und aus der dritten Sperrkammer zum Einsatz kommen. Dies bringt den Vorteil einer gewissen Redundanz mit sich. Denn beim Ausfall einer der beiden Absaugvorrichtungen kann das Absaugen des Sperrmediums durch die jeweils andere Absaugvorrichtung erfolgen, so dass es nicht zu einem vollständigen Ausfall der Absaugfunktion kommt.

Vorteilhaft ist es ferner, wenn die erste Sperrkammer auslassfrei ausgebildet ist. Dadurch, dass die erste Sperrkammer keinen Auslass für das Sperrmedium ausweist, kann das Sperrmedium nur durch Undichtigkeiten in den die erste Sperrkammer gegenüber der Welle abdichtenden Dichtungen entweichen. Bevorzugt strömt der größere Teil des Sperrmediums durch eine Dichtung zwischen der ersten Sperrkammer und dem Innenraum des Expanders bzw. des Kompressors, während der kleinere Teil durch eine Dichtung zwischen der ersten Sperrkammer und der zweiten Sperrkammer entweicht. Alternativ kann die erste Sperrkammer einen Auslass aufweisen. Der Auslass der ersten Sperrkammer kann optional mit einer gemeinsamen Absaugvorrichtung oder einer separaten Absaugvorrichtung verbunden sein, so dass das Sperrmedium auch aus der ersten Sperrkammer abgesaugt werden kann.

Eine vorteilhafte Ausgestaltung sieht vor, dass die zweite Sperrkammer einlassfrei ausgebildet ist, so dass Gase ausschließlich durch Undichtigkeiten in den jeweiligen Dichtungen zwischen der ersten Sperrkammer und der zweiten Sperrkammer bzw. Dichtungen zwischen der etwaigen dritten Sperrkammer und der zweiten Sperrkammer in die zweite Sperrkammer gelangen können. Es ist alternativ oder zusätzlich möglich, die dritte Sperrkammer einlassfrei auszubilden, so dass Gase ausschließlich durch Undichtigkeiten in den jeweiligen Dichtungen zwischen der zweiten Sperrkammer und der dritten Sperrkammer bzw. Dichtungen zwischen der Umgebung und der dritten Sperrkammer in die dritte Sperrkammer gelangen können. Gemäß einer weiteren Abwandlung kann vorgesehen sein, dass die zweite Sperrkammer und/oder die dritte Sperrkammer einen Einlass aufweist, über welchen ein Sperrmedium zugeführt werden kann, welches bevorzugt identisch mit dem Sperrmedium ist, welches der ersten Sperrkammer zugeführt wird.

Bei einer Anlage der eingangs genannten Art ist es vorteilhaft, wenn eine gemeinsame Absaugvorrichtung für den NO-Kompressor und den Restgasexpander vorgesehen ist. Durch eine gemeinsame Absaugvorrichtung für den NO-Kompressor und den Restgasexpander kann der Aufwand zur Abdichtung von NO-Kompressor und Restgasexpander verringert werden.

Die eingangs genannte Aufgabe wird ferner durch ein Verfahren zum Abdichten einer drehbaren Welle eines NO-Kompressors und/oder Restgasexpanders bei einem Verfahren zum Betrieb einer Anlage zur Herstellung von Salpetersäure gemäß dem nebengeordneten Verfahrensanspruch gelöst, wobei eine Dichtvorrichtung Verwendung findet mit einer ersten Sperrkammer, welche die Welle umgibt und einen Einlass zur Zuführung eines Sperrmediums aufweist, und einer von der ersten Sperrkammer durch eine Dichtung getrennten zweiten Sperrkammer, welche die Welle umgibt und einen Auslass zum Austritt des Sperrmediums aufweist, wobei ein Sperrmedium in die erste Sperrkammer eingeleitet wird und das Sperrmedium aus der zweiten Sperrkammer abgesaugt wird.

Bei einem Verfahren zum Betrieb einer Anlage zur Herstellung von Salpetersäure mit einem NO-Kompressor und einem Restgasexpander wird die eingangs genannte Aufgabe dadurch gelöst, dass zum Abdichten der Wellen von NO-Kompressor und/oder Restgasexpander das vorstehend beschriebene Abdichtungsverfahren verwendet wird.

Bei diesem Verfahren ergeben sich dieselben Vorteile, wie sie bereits im Zusammenhang mit der Dichtvorrichtung beschrieben worden sind.

Eine vorteilhafte Ausgestaltung des Verfahrens sieht vor, dass das Sperrmedium aus einer dritten Sperrkammer abgesaugt wird, welche die Welle umgibt und einen Auslass zum Austritt des Sperrmediums aufweist, wobei die zweite Sperrkammer zwischen der ersten Sperrkammer und der dritten Sperrkammer angeordnet ist.

Bevorzugt kommt bei dem Verfahren als Sperrmedium ein Sperrgas zum Einsatz, insbesondere Sperrluft. Als Sperrluft kann Primärluft, Sekundärluft, Instrumentenluft oder Anlageluft verwendet werden. Alternativ kann ein inertes Gas als Sperrgas verwendet werden.

Besonders bevorzugt wird als Sperrmedium ein Teil des dem Restgasexpander zugeführten Restgases verwendet. Dies bringt den Vorteil mit sich, dass das Restgas in dem Herstellungsprozess zur Herstellung von Salpetersäure ohnehin vorhanden ist und kein weiteres Medium bereitgestellt werden muss.

Vorteilhaft ist es, wenn das Sperrmedium über eine Strahlpumpe abgesaugt wird, welche mit einem Treibstrom aus dem Sperrmedium betrieben wird. Wenn das Sperrmedium als Treibgas für die Strahlpumpe verwendet wird, ist es nicht erforderlich, ein weiteres Medium zum Betrieb der Strahlpumpe bereitzustellen.

Beim erfindungsgemäßen Verfahren können alternativ oder zusätzlich auch die im Zusammengang mit der Dichtvorrichtung bzw. der Anlage zur Herstellung von Salpetersäure beschriebenen vorteilhaften Ausgestaltungen Anwendung finden.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsform der Erfindung, welche den Erfindungsgedanken nicht einschränken.

### Kurze Beschreibung der Figuren

- Fig. 1: eine schematische Darstellung eines ersten Ausführungsbeispiels der erfindungsgemäßen Anlage zur Salpetersäureherstellung,
- Fig. 2: eine schematische Darstellung eines zweiten Ausführungsbeispiels der erfindungsgemäßen Anlage zur Salpetersäureherstellung,
- Fig. 3: eine schematische Schnittdarstellung einer erfindungsgemäß verwendbaren Dichtvorrichtung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

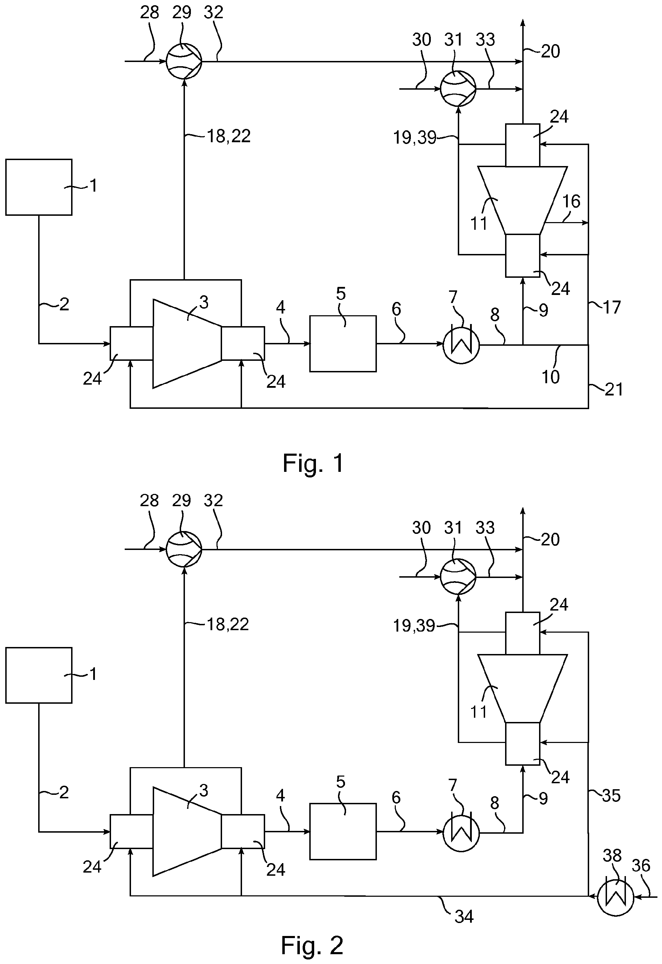

In der **Fig. 1** ist schematisch eine Anlage zur Herstellung von Salpetersäure (HNO3) dargestellt. Die Anlage weist einen Niederdruckteil 1 auf, in welchem ein Ammoniak-Luft-Gemisch mittels eines Katalysators zu Stickstoffmonoxid (NO) und Wasser oxidiert wird. Das gasförmige Stickstoffmonoxid 2 wird in einen NO-Kompressor 3 geleitet, in welchem das Stickstoffmonoxid verdichtet wird. Das aus dem NO-Kompressor 3 austretende verdichtete Stickstoffmonoxid 4 wird in einen Hochdruckteil 5 der Anlage überführt, in welchem eine Oxidation von NO zu Stickstoffdioxid (NO₂) sowie eine Absorption von Salpetersäure (HNO₃) stattfindet. Das nicht absorbierte Restgas 6 wird über einen Wärmetauscher 7 einem Restgasexpander 11 zugeleitet, um es zur Gewinnung von Energie auf Umgebungsdruck zu entspannen und in einem Abgasstrom 20 abzuleiten.

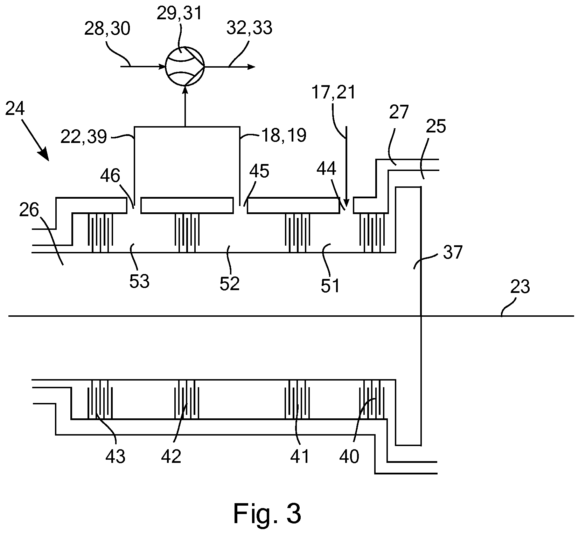

Da das Entweichen stickstoffhaltiger Gase zur Reizung bzw. zur Schädigung der Atemwege führen kann, sind bei dem NO-Kompressor 3 und dem Restgasexpander 11 der Anlage besondere Vorkehrungen getroffen, um das unerwünschte Austreten der in den NO-Kompressor 3 und den Restgasexpander 11 eingeleiteten Gase zu verhindern. Sowohl der NO-Kompressor 3 als auch der Restgasexpander 11 weisen zwei Dichtvorrichtungen 24 auf, über welche die drehbaren Wellen 26 von NO-Kompressor 3 bzw. Restgasexpander 11 abgedichtet werden und welche nachfolgend anhand der Darstellung in Fig. 3 näher erläutert werden soll.

Die **Fig. 3** zeigt einen Querschnitt durch eine Welle 26 des NO-Kompressors 3 oder des Restgasexpanders 11, welche um eine Drehachse 23 drehbar gegenüber einem feststehenden Gehäuse 27 gelagert ist. Auf der Welle 26 ist im Innenraum 25 des NO-Kompressors 3 bzw. des Restgasexpanders 11 ein Laufrad 37 angeordnet, welches im Falle des NO-Kompressors 3 zur Verdichtung des geförderten Gases beiträgt bzw. im Falle des Restgasexpanders 11 durch das eingeleitete Gas angetrieben wird. Zur Abdichtung des Innenraums gegenüber der Umgebung ist eine mehrstufige Dichtvorrichtung 24 vorgesehen. Die Dichtvorrichtung 24 weist eine erste Sperrkammer 51 auf, welche die Welle 26 vollständig umgibt. Die erste Sperrkammer 51 ist ringförmig ausgebildet. Sie ist gegenüber dem Innenraum 25 durch eine Dichtung 40 getrennt. Die Dichtung 40 ist als Labyrinthdichtung ausgebildet, welche durch ihre Bauart bedingt eine gewisse Undichtigkeit aufweist. Die erste Sperrkammer 51 weist einen Einlass 44 auf, durch welchen ein als Sperrgas ausgebildetes Sperrmedium in die erste Sperrkammer 51 eingebracht werden kann.

Ferner weist die Dichtvorrichtung 24 eine zweite Sperrkammer 52 auf, welche einen ringförmigen Aufbau hat und die Welle 26 umgibt. Die zweite Sperrkammer 52 ist unmittelbar benachbart zu der ersten Sperrkammer 51 angeordnet. Sie ist von der ersten Sperrkammer 52 durch eine Dichtung 41 getrennt. Die Dichtung 41 ist ebenfalls als Labyrinthdichtung ausgebildet. In der zweiten Sperrkammer 52 ist ein Auslass 45 vorgesehen, über welchen Gas aus der zweiten Sperrkammer 52 austreten kann. Die erste Sperrkammer 51 ist zwischen dem Innenraum 25 des NO-Kompressors 3 bzw. des Restgasexpanders 11 und der zweiten Sperrkammer 52 angeordnet.

Zudem ist eine dritte Sperrkammer 53 vorgesehen, welche ebenfalls ringförmig ausgestaltet ist und die Welle 26 umgibt. Die dritte Sperrkammer 53 ist unmittelbar benachbart zu der zweiten Sperrkammer 52 angeordnet und von der zweiten Sperrkammer durch eine Dichtung 42 getrennt. Auf ihrer der zweiten Sperrkammer 52 gegenüberliegenden Seite ist eine weitere Dichtung 43 vorgesehen, über welche die dritte Sperrkammer 53 gegenüber der Umgebung abgedichtet wird. Die beiden Dichtungen 42, 43, welche die dritte Sperrkammer 53 begrenzen, sind als Labyrinthdichtungen ausgestaltet.

Die erste Sperrkammer 51 ist auslassfrei ausgebildet, so dass das über den Einlass 44 eingeleitete Sperrgas die erste Sperrkammer ausschließlich durch die beiden Dichtungen 40 und 41 verlassen kann, welche die erste Sperrkammer 51 gegenüber dem Innenraum 25 und der zweiten Sperrkammer 52 begrenzen. Die zweite Sperrkammer 52 und die dritte Sperrkammer 53 sind einlassfrei ausgebildet. D.h. dass Gase ausschließlich über die Dichtungen 41 und 42 in die zweite Sperrkammer 52 gelangen können, welche die zweite Sperrkammer 52 gegenüber der ersten Sperrkammer 51 und der dritten Sperrkammer 53 begrenzen. In die dritte Sperrkammer 53 können Gase ausschließlich durch die beiden Dichtungen 42 und 43 gelangen, welche die dritte Sperrkammer 53 gegenüber der zweiten Sperrkammer 52 und der Umgebung begrenzen.

Um die Sicherheit der Dichtvorrichtung 24 zu erhöhen, ist der Auslass 45 der zweiten Sperrkammer 52 mit einer Absaugvorrichtung 29, 31 verbunden. Durch die Absaugvorrichtung 29,31 kann in der zweiten Sperrkammer 52 ein Unterdruck erzeugt werden, so dass Gas aus der zweiten Sperrkammer 52 abgesaugt wird. Selbst beim Ausfall des Sperrmediums wird Gas, welches sich in der zweiten Sperrkammer 52 sammelt, abgesaugt und kann nicht in die Umgebung entweichen. Hierdurch kann die Freisetzung gefährlicher Gase verhindert und somit die Sicherheit des NO-Kompressors 3 bzw. des Expanders 11 erhöht werden. Das von der Absaugvorrichtung 29, 31 abgesaugte Gas 32, 33 wird dem Abgasstrom 20 des Restgasexpanders 11 zugeführt.

Wie der Darstellung in **Fig. 3** zu entnehmen ist, ist auch der Auslass 46 der dritten Sperrkammer 53 mit der Absaugvorrichtung 29, 31 verbunden, so dass Gas auch aus der dritten Sperrkammer 53 abgesaugt werden kann. Insofern sind die zweite Sperrkammer 52 und die dritte Sperrkammer 53 mit einer gemeinsamen Absaugvorrichtung 29, 31 verbunden.

Die Absaugvorrichtung 29, 31 ist als Strahlpumpe, insbesondere als Ejektor, ausgebildet. Die Absaugvorrichtung 29, 31 wird mit einem Treibstrom 28, 30 betrieben. Als Treibstrom kann ein Strom aus dem Sperrmedium verwendet werden.

Bei der in **Fig. 1** dargestellten Anlage zur Salpetersäureherstellung sind zweit separate Absaugvorrichtungen 29, 31 vorgesehen, wobei eine erste Absaugvorrichtung 29 mit dem NO-Kompressor 3 und eine zweite Absaugvorrichtung 31 mit dem Restgasexpander 11 verbunden ist. Der Absaugstrom 18, welcher aus der zweiten Sperrkammer 52 des NO-Kompressors 3 abgesaugt wird, wird zusammen mit dem Absaugstrom 22, der aus der dritten Sperrkammer des NO-Kompressors abgesaugt wird, der ersten Absaugvorrichtung 29 zugeführt. Der Absaugstrom 19, welcher aus der zweiten Sperrkammer 52 des Restgasexpanders 11 abgesaugt wird zusammen mit dem Absaugstrom 39, der aus der dritten Sperrkammer 53 des Restgasexpanders 11 abgesaugt wird, der zweiten Absaugvorrichtung 31 zugeführt.

Abweichend von dem ersten Ausführungsbeispiel können die zweiten Sperrkammern 52 und dritten Sperrkammern 53 von NO-Kompressor 3 und Restgasexpander 11 mit einer gemeinsamen Absaugvorrichtung verbunden sein.

Bei der Anlage gemäß dem ersten Ausführungsbeispiel wird als Sperrmedium ein Teilstrom 17, 21 des dem Restgasexpander 11 zugeführten Restgases 8 verwendet. Hierzu wird der vom Wärmetauscher 7 kommende Restgasstrom 8 in zwei Teilströme 9 10 geteilt, wobei ein erster Teilstrom 9 dem Restgasexpander 11 zugeleitet wird. Ein zweiter Teilstrom 10 wird in zwei Teilströme 17, 21 aufgeteilt, wobei ein erster Teilstrom 17 dem Restgasexpander 11 und ein zweiter Teilstrom 21 dem Kompressor 3 zugeführt wird. Alternativ oder zusätzlich kann das Restgas aus einer Zwischenstufe des Restgasexpanders 11 entnommen werden. Das der Zwischenstufe entnommene Restgas ist in der Darstellung in Fig. 1 durch das Bezugszeichen 16 dargestellt.

Die in **Fig. 2** dargestellte Anlage zur Salpetersäureherstellung ist im Wesentlichen identisch mit der Anlage gemäß dem ersten Ausführungsbeispiel ausgebildet. Abweichend von dem ersten Ausführungsbeispiel wird der Anlage ein Sperrgasstrom 36 von extern zugeleitet. Der Sperrgasstrom 36 wird durch einen Wärmetauscher 38 geführt und dann in zwei Teilströme 34 und 35 aufgeteilt, wobei ein erster Teilstrom 34 dem NO-Kompressor 3 und ein zweiter Teilstrom 35 dem Restgasexpander 11 zugeführt wird. Der Sperrgasstrom 36 kann aus Primärluft, Sekundärluft, Instrumentenluft oder Anlageluft gebildet sein. Alternativ kann ein inertes Gas als Sperrgas verwendet werden.

Die vorstehend beschriebenen Anlagen zur Salpetersäureherstellung mit einem NO-Kompressor 3 und einem Restgasexpander 11 weisen jeweils Dichtvorrichtungen 24 zur Abdichtung der drehbaren Wellen 26 des NO-Kompressors 3 und des Restgasexpanders 11 auf. Die Dichtvorrichtungen umfassen eine erste Sperrkammer 51, welche die Welle 26 umgibt und einen Einlass 44 zur Zuführung eines Sperrmediums aufweist, und eine von der ersten Sperrkammer 51 durch eine Dichtung 41 getrennte zweiten Sperrkammer 52, welche die Welle 26 umgibt und einen Auslass 45 zum Austritt des Sperrmediums aufweist, wobei das Sperrmedium aus der zweiten Sperrkammer 52 durch eine Absaugvorrichtung 29, 31 abgesaugt wird.

### Bezugszeichenliste

- 1: Niederdruckteil
- 2: Stickstoffmonoxid
- 3: NO-Kompressor
- 4: verdichtetes Stickstoffmonoxid
- 5: Hochdruckteil
- 6: Restgas
- 7: Wärmetauscher
- 8: Restgas
- 9: Restgasteilstrom
- 10: Restgasteilstrom
- 11: Restgasexpander
- 16: Restgasstrom aus Zwischenstufe
- 17: Restgasteilstrom
- 18, 19: Absaugstrom
- 20: Abgasstrom
- 21: Restgasteilstrom
- 22: Absaugstrom
- 23: Drehachse
- 24: Dichtvorrichtung
- 25: Innenraum
- 26: Welle
- 27: Gehäuse
- 28: Treibstrom
- 29: Absaugvorrichtung
- 30: Treibstrom
- 31: Absaugvorrichtung
- 34, 35: Teilstrom
- 36: Sperrgasstrom
- 37: Laufrad
- 38: Wärmetauscher
- 39: Absaugstrom
- 40, 41, 42, 43: Dichtung
- 44: Einlass
- 45, 46: Auslass
- 51: erste Sperrkammer
- 52: zweite Sperrkammer
- 53: dritte Sperrkammer

## Patentansprüche

1. Anlage zur Herstellung von Salpetersäure mit einem NO-Kompressor (3) und einem Restgasexpander (11), **dadurch gekennzeichnet, dass** NO-Kompressor (3) und/oder Restgasexpander (11) eine Dichtvorrichtung zur Abdichtung einer drehbaren Welle (26) des NO-Kompressor (3) oder des Restgasexpander (11) aufweisen, mit einer ersten Sperrkammer (51), welche die Welle (26) umgibt und einen Einlass (44) zur Zuführung eines Sperrmediums aufweist, und einer von der ersten Sperrkammer (51) durch eine Dichtung (41) getrennten zweiten Sperrkammer (52), welche die Welle umgibt (26) und einen Auslass (45) zum Austritt des Sperrmediums aufweist, **gekennzeichnet durch** eine Absaugvorrichtung (29, 31) zum Absaugen des Sperrmediums aus der zweiten Sperrkammer (52).

2. Anlage nach Anspruch 1, **dadurch gekennzeichnet, dass** die Absaugvorrichtung (29, 31) als Strahlpumpe, insbesondere als Ejektor, ausgebildet ist.

3. Anlage nach einem der vorhergehenden Ansprüche, **gekennzeichnet durch** eine dritte Sperrkammer (53), welche die Welle (26) umgibt und einen Auslass (46) zum Austritt des Sperrmediums aufweist, wobei die zweite Sperrkammer (52) zwischen der ersten Sperrkammer (51) und der dritten Sperrkammer (53) angeordnet ist.

4. Anlage nach Anspruch 3, **dadurch gekennzeichnet, dass** das Sperrmedium über die Absaugvorrichtung (29, 31) aus der dritten Sperrkammer (53) absaugbar ist.

5. Anlage nach einem der vorhergehenden Ansprüche, **dadurch gekennzeichnet, dass** die erste Sperrkammer (51) auslassfrei ausgebildet ist.

6. Anlage nach einem der vorhergehenden Ansprüche, **dadurch gekennzeichnet, dass** die zweite Sperrkammer (52) und/oder die dritte Sperrkammer (53) einlassfrei ausgebildet ist.

7. Anlage nach einem der vorhergehenden Ansprüche, **gekennzeichnet durch** eine gemeinsame Absaugvorrichtung (29, 31) für den NO-Kompressor (3) und den Restgasexpander (11).

8. Verfahren zum Betrieb einer Anlage zur Herstellung von Salpetersäure mit einem NO-Kompressor (3) und einem Restgasexpander (11) und zum Abdichten der Wellen (26) von NO-Kompressor (3) und/oder Restgasexpander (11) mit einer Dichtvorrichtung (24), umfassend eine erste Sperrkammer (51), welche die Welle (26) umgibt und einen Einlass (44) zur Zuführung eines Sperrmediums aufweist, und eine von der ersten Sperrkammer (51) durch eine Dichtung (41) getrennten zweiten Sperrkammer (52), welche die Welle (26) umgibt und einen Auslass (45) zum Austritt des Sperrmediums aufweist, wobei ein Sperrmedium in die erste Sperrkammer (51) eingeleitet wird, **dadurch gekennzeichnet,**
**dass** das Sperrmedium aus der zweiten Sperrkammer (52) abgesaugt wird.

9. Verfahren nach Anspruch 8, **dadurch gekennzeichnet**, das Sperrmedium aus einer dritten Sperrkammer (53) abgesaugt wird, welche die Welle (26) umgibt und einen Auslass (46) zum Austritt des Sperrmediums aufweist, wobei die zweite Sperrkammer (52) zwischen der ersten Sperrkammer (51) und der dritten Sperrkammer (53) angeordnet ist.

10. Verfahren nach einem der Ansprüche 8 oder 9, **dadurch gekennzeichnet, dass** das Sperrmedium ein Sperrgas, insbesondere Sperrluft, oder ein Arbeitsgas ist.

11. Verfahren nach einem der Ansprüche 8 bis 10, **dadurch gekennzeichnet, dass** das Sperrmedium über eine Strahlpumpe abgesaugt wird, welche mit einem Treibstrom aus dem Sperrmedium betrieben wird.

12. Verfahren nach einem der vorhergehenden Ansprüche, **dadurch gekennzeichnet, dass** als Sperrmedium ein Teil des dem Restgasexpander zugeführten Restgases verwendet wird.

## Claims

1. Installation for producing nitric acid with a NO compressor (3) and a residual gas expander (11), **characterized in that** NO compressor (3) and/or residual gas expander (11) have a sealing device for sealing a rotatable shaft (26) of the NO compressor (3) or of the residual gas expander (11), having a first sealing chamber (51), which surrounds the shaft (26) and comprises an inlet (44) for the supply of a sealing medium, and a second sealing chamber (52), which is separated from the first sealing chamber (51) by a seal (41) and surrounds the shaft (26) and comprises an outlet (45) for the discharge of the sealing medium, **characterized by**
an extraction device (29, 31) for the extraction of the sealing medium out of the second sealing chamber (52).

2. Installation according to Claim 1, **characterized in that** the extraction device (29, 31) is formed as a jet pump, in particular as an ejector.

3. Installation according to either one of the preceding claims, **characterized by** a third sealing chamber (53), which surrounds the shaft (26) and comprises an outlet (46) for the discharge of the sealing medium, wherein the second sealing chamber (52) is arranged between the first sealing chamber (51) and the third sealing chamber (53).

4. Installation according to Claim 3, **characterized in that** the sealing medium can be extracted out of the third sealing chamber (53) via the extraction device (29, 31).

5. Installation according to any one of the preceding claims, **characterized in that** the first sealing chamber (51) is formed to be outlet-free.

6. Installation according to any one of the preceding claims, **characterized in that** the second sealing chamber (52) and/or the third sealing chamber (53) are/is formed to be inlet-free.

7. Installation according to any one of the preceding claims, **characterized by** a joint extraction device (29, 31) for the NO compressor (3) and the residual gas expander (11).

8. Method for operating an installation for producing nitric acid with a NO compressor (3) and a residual gas expander (11) and for sealing the shafts (26) of NO compressor (3) and/or residual gas expander (11), having a sealing device (24), encompassing a first sealing chamber (51), which surrounds the shaft (26) and comprises an inlet (44) for the supply of a sealing medium, and a second sealing chamber (52), which is separated from the first sealing chamber (51) by a seal (41) and surrounds the shaft (26) and comprises an outlet (45) for the discharge of the sealing medium, wherein a sealing medium is introduced into the first sealing chamber (51), **characterized in that** the sealing medium is extracted out of the second sealing chamber (52).

9. Method according to Claim 8, **characterized in that** the sealing medium is extracted out of a third sealing chamber (53), which surrounds the shaft (26) and comprises an outlet (46) for the discharge of the sealing medium, wherein the second sealing chamber (52) is arranged between the first sealing chamber (51) and the third sealing chamber (53) .

10. Method according to either one of Claims 8 or 9, **characterized in that** the sealing medium is a sealing gas, in particular sealing air or a working gas.

11. Method according to any one of Claims 8 to 10, **characterized in that** the sealing medium is extracted via a jet pump which is operated with a jet stream from the sealing medium.

12. Method according to any one of the preceding claims, **characterized in that** part of the residual gas supplied to the residual gas expander is used as the sealing medium.

## Revendications

1. Installation de production d'acide nitrique avec un compresseur de NO (3) et un détendeur de gaz résiduel (11), **caractérisée en ce que** le compresseur de NO (3) et/ou le détendeur de gaz résiduel (11) présentent un dispositif d'étanchéité permettant de réaliser l'étanchéité d'un arbre rotatif (26) du compresseur de NO (3) ou du détendeur de gaz résiduel (11), avec une première chambre d'arrêt (51), qui entoure l'arbre (26) et qui présente une entrée (44) pour la fourniture d'un milieu d'arrêt, et avec une deuxième chambre d'arrêt (52) séparée de la première chambre d'arrêt (51) par un joint d'étanchéité (41), qui entoure l'arbre (26) et qui présente une sortie (45) pour la sortie du milieu d'arrêt, **caractérisée par** un dispositif d'aspiration (29, 31) pour aspirer le milieu d'arrêt hors de la deuxième chambre d'arrêt (52) .

2. Installation selon la revendication 1, **caractérisée en ce que** le dispositif d'aspiration (29, 31) est formé par une pompe à jet, en particulier un éjecteur.

3. Installation selon l'une quelconque des revendications précédentes, **caractérisée par** une troisième chambre d'arrêt (53), qui entoure l'arbre (26) et qui présente une sortie (46) pour la sortie du milieu d'arrêt, dans laquelle la deuxième chambre d'arrêt (52) est disposée entre la première chambre d'arrêt (51) et la troisième chambre d'arrêt (53).

4. Installation selon la revendication 3, **caractérisée en ce que** le milieu d'arrêt peut être aspiré par le dispositif d'aspiration (29, 31) hors de la troisième chambre d'arrêt (53).

5. Installation selon l'une quelconque des revendications précédentes, **caractérisée en ce que** la première chambre d'arrêt (51) est réalisée sans sortie.

6. Installation selon l'une quelconque des revendications précédentes, **caractérisée en ce que** la deuxième chambre d'arrêt (52) et/ou la troisième chambre d'arrêt (53) est réalisée sans entrée.

7. Installation selon l'une quelconque des revendications précédentes, **caractérisée par** un dispositif d'aspiration commun (29, 31) pour le compresseur de NO (3) et le détendeur de gaz résiduel (11).

8. Procédé de conduite d'une installation de production d'acide nitrique avec un compresseur de NO (3) et un détendeur de gaz résiduel (11) et avec un dispositif d'étanchéité (24) permettant de réaliser l'étanchéité de l'arbre (26) du compresseur de NO (3) et/ou du détendeur de gaz résiduel (11), comprenant une première chambre d'arrêt (51), qui entoure l'arbre (26) et qui présente une entrée (44) pour la fourniture d'un milieu d'arrêt, et une deuxième chambre d'arrêt (52), séparée de la première chambre d'arrêt (51) par un joint d'étanchéité (41), qui entoure l'arbre (26) et qui présente une sortie (45) pour la sortie du milieu d'arrêt, dans lequel on introduit un milieu d'arrêt dans la première chambre d'arrêt (51), **caractérisé en ce que** l'on aspire le milieu d'arrêt hors de la deuxième chambre d'arrêt (52).

9. Procédé selon la revendication 8, **caractérisé en ce que** l'on aspire le milieu d'arrêt hors d'une troisième chambre d'arrêt (53), qui entoure l'arbre (26) et qui présente une sortie (46) pour la sortie du milieu d'arrêt, dans lequel la deuxième chambre d'arrêt (52) est disposée entre la première chambre d'arrêt (51) et la troisième chambre d'arrêt (53).

10. Procédé selon une des revendications 8 ou 9, **caractérisé en ce que** le milieu d'arrêt est un gaz d'arrêt, en particulier de l'air d'arrêt, ou un gaz de travail.

11. Procédé selon l'une quelconque des revendications 8 à 10, **caractérisé en ce que** l'on aspire le milieu d'arrêt par une pompe à jet, qui fonctionne avec un courant propulseur composé du milieu d'arrêt.

12. Procédé selon l'une quelconque des revendications précédentes, **caractérisé en ce que** l'on utilise comme milieu d'arrêt une partie du gaz résiduel fourni au détendeur de gaz résiduel.
